(19) Europäisches Patentamt
European Patent Office
Office européen des brevets

(11) **EP 3 183 853 B1**

(12) **EUROPEAN PATENT SPECIFICATION**

(45) Date of publication and mention
of the grant of the patent:
**20.06.2018 Bulletin 2018/25**

(51) Int Cl.:
*H04L 25/03* (2006.01)     *H04B 10/2507* (2013.01)
*H04B 10/2513* (2013.01)    *H04B 10/69* (2013.01)

(21) Application number: **14765900.7**

(22) Date of filing: **05.09.2014**

(86) International application number:
**PCT/EP2014/068939**

(87) International publication number:
**WO 2016/034246 (10.03.2016 Gazette 2016/10)**

(54) **A COMMUNICATION RECEIVER FOR COMPENSATING A GROUP DELAY OF A COMMUNICATION SIGNAL**

KOMMUNIKATIONSEMPFÄNGER ZUR KOMPENSATION EINER GRUPPENVERZÖGERUNG EINES KOMMUNIKATIONSSIGNALS

RÉCEPTEUR DE COMMUNICATION POUR COMPENSER UN RETARD DE GROUPE D'UN SIGNAL DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.06.2017 Bulletin 2017/26**

(73) Proprietor: **Huawei Technologies Co. Ltd.**
**Shenzhen, Guangdong 518129 (CN)**

(72) Inventors:
• **ZARUBINSKY, Michael**
 **80992 Munich (DE)**
• **QI, Juan**
 **80992 Munich (DE)**
• **GIDRON, Dori**
 **80992 Munich (DE)**
• **SVERDLOV, Alexander**
 **80992 Munich (DE)**

(74) Representative: **Körber, Martin Hans et al**
**Mitscherlich PartmbB**
**Patent- und Rechtsanwälte**
**Sonnenstrasse 33**
**80331 München (DE)**

(56) References cited:
**WO-A1-2013/139395**

• **ISRAA SLIM ET AL: "Delayed Single-Tap Frequency-Domain Chromatic-Dispersion Compensation", IEEE PHOTONICS TECHNOLOGY LETTERS, IEEE SERVICE CENTER, PISCATAWAY, NJ, US, vol. 25, no. 2, 1 January 2013 (2013-01-01), pages 167-170, XP011486253, ISSN: 1041-1135, DOI: 10.1109/LPT.2012.2231064 cited in the application**
• **HO K-P: "Subband equaliser for chromatic dispersion of optical fibre", ELECTRONIC LETTERS, THE INSTITUTION OF ENGINEERING AND TECHNOLOGY, vol. 45, no. 24, 19 November 2009 (2009-11-19), pages 1224-1226, XP006034319, ISSN: 1350-911X, DOI: 10.1049/EL:20091472**

**Description**

TECHNICAL FIELD

The invention relates to the field of communication systems, in particular to group delay compensation in communication receivers.

BACKGROUND OF THE INVENTION

In a communication system, for example an optical communication system, a communication signal transmitted over a communication channel can be distorted by different distortion mechanisms. A common distortion mechanism in optical communication systems is the chromatic dispersion (CD) of the communication channel, wherein the chromatic dispersion can be characterized by a quadratic phase response or a linear group delay response over frequency of the communication channel.

Compensation can for example be achieved by an equalizer at a communication receiver of the communication system. The equalizer can compensate for an amplitude response and/or a phase response of the communication channel in time domain (TD) or in frequency domain (FD). Since a group delay response of the communication channel is directly related to the phase response of the communication channel by a differentiation over frequency, group delay compensation can be realized.

The compensation is usually based on a filtering of the communication signal by a filter with an inverse response for example with regard to the amplitude response and/or the phase response of the communication channel. In frequency domain, compensation can for example be realized by transforming the communication signal into frequency domain, weighting the frequency components in dependence of the amplitude response and/or the phase response of the communication channel, and transforming the weighted frequency components back into time domain.

Common compensation techniques, however, can suffer from a high computational complexity and/or a low compensation performance. Furthermore, common compensation techniques can introduce compensation artefacts when compensating for a distortion mechanism of the communication channel.

In I. Slim, A. Mezghani, L. G. Baltar, J. Qi, F. N. Hauske, and J. A. Nossek, "Delayed Single-Tap Frequency-Domain Chromatic-Dispersion Compensation", in IEEE Photonics Technology Letters, Vol. 25, No. 2, January 15, 2013, an approach for compensating a chromatic dispersion of a communication channel is described.

In WO2013/139395, an approach for compensating a chromatic dispersion of a communication channel is described.

In US2009/0238578 A1, an approach for compensating a chromatic dispersion of a communication channel is described.

SUMMARY OF THE INVENTION

It is the object of the invention to provide an efficient concept for compensating a group delay of a communication signal.

This object is achieved by the features of the independent claims. Further implementation forms are apparent from the dependent claims, the description and the figures.

The invention is based on the finding that a communication signal can be transformed into a plurality of frequency sub-band communication signals, wherein each frequency sub-band communication signal can be compensated separately by a first delayer and a second delayer. The first delayer can delay a frequency sub-band communication signal by a group delay value, and the second delayer can delay a delayed frequency sub-band communication signal by an excess group delay value.

The group delay value can be a multiple of a sampling time period of the frequency sub-band communication signal and can therefore be implemented efficiently by a finite impulse response (FIR) filter. The excess group delay value can be a fraction of a sampling time period of the frequency sub-band communication signal and can therefore be implemented efficiently by an interpolation filter.

The finite impulse response (FIR) filter can further comprise a complex-valued filtering coefficient for compensating a phase value associated to a phase response of the communication channel. The phase response can be approximated by a plurality of lines, wherein the plurality of lines can be associated to the plurality of frequency sub-band communication signals. A group delay value and/or an excess group delay value can specify an angle of a line of the number of lines, and a phase value can specify a position of the line. The phase value can be a phase offset.

For a plurality of frequency sub-band communication signals, a plurality of group delay values and/or a group delay function can be provided. A total group delay function can be derived by a convolution of the group delay function by a smoothing function. An excess group delay value can be a difference between a total group delay value and an associated group delay value.

Consequently, a plurality of excess group delay values can be derived from the plurality of group delay values and/or the group delay function upon the basis of the smoothing function. Therefore, a group delay value and an excess group delay value can be provided for each frequency sub-band communication signal of the plurality of frequency sub-band communication signals. The invention can be applied for chromatic dispersion (CD) compensation within an optical communication system.

According to a first aspect, the invention relates to a communication receiver for compensating a group delay of a communication signal, the group delay being indicated by a plurality of group delay values being associated to different frequency sub-bands of the communication signal, the plurality of group delay values forming a group delay function, the communication receiver comprising a transformer being configured to transform the communication signal into a plurality of frequency sub-band communication signals, a processor being configured to convolute the group delay function by a smoothing function to obtain a total group delay function, and to generate a plurality of excess group delay values as a difference between a total group delay value and the associated group delay value, a plurality of first delayers for delaying the plurality of frequency sub-band communication signals upon the basis of the plurality of group delay values to obtain a first plurality of delayed frequency sub-band communication signals, wherein a first delayer of the plurality of first delayers is configured to delay a frequency sub-band communication signal upon the basis of a group delay value associated with the frequency sub-band communication signal, a plurality of second delayers for delaying the first plurality of delayed frequency sub-band communication signals upon the basis of the plurality of excess group delay values to obtain a second plurality of delayed frequency sub-band communication signals, wherein a second delayer of the plurality of second delayers is configured to delay a delayed frequency sub-band communication signal of the first plurality of delayed frequency sub-band communication signals upon the basis of an excess group delay value associated with the delayed frequency sub-band communication signal of the first plurality of delayed frequency sub-band communication signals, and an inverse transformer being configured to inversely transform the second plurality of delayed frequency sub-band communication signals for compensating the group delay of the communication signal. Thus, an efficient concept for compensating a group delay of a communication signal can be realized.

The transformer, the plurality of first delayers, the plurality of second delayers, and the inverse transformer can be implemented in an application specific integrated circuit (ASIC). The processor can be implemented in a micro-controller (μC). The plurality of group delay values and/or the plurality of excess group delay values can initially be determined by the processor. The plurality of group delay values and/or the plurality of excess group delay values can be pre-calculated offline.

A total group delay function can be derived by the processor by convoluting the group delay function by the smoothing function. An excess group delay function can be derived by the processor by subtracting the group delay function from the determined total group delay function. The excess group delay function can be formed by the plurality of excess group delay values. The plurality of excess group delay values can be extracted from the excess group delay function and can be provided by the processor. A total group delay value of the total group delay function can be a sum of a group delay value of the group delay function and an excess group delay value of the excess group delay function.

A phase response of a communication channel inducing the group delay of the communication signal can be considered, wherein the phase response can be indicated by a plurality of phase values being associated to the different frequency sub-bands of the communication signal. For compensating a phase value of the plurality of phase values, a multiplier for example within a first delayer of the plurality of first delayers can be employed.

In a first implementation form of the communication receiver according to the first aspect as such, the plurality of group delay values are integer multiples of a sampling time period of the plurality of frequency sub-band communication signals, and the plurality of excess group delay values are fractions of the sampling time period of the plurality of frequency sub-band communication signals. Thus, the plurality of first delayers and/or the plurality of second delayers can be implemented efficiently.

The group delay function can be a step-shaped function. A group delay value can realize an integer delay. An excess group delay value can realize a fractional delay.

In a second implementation form of the communication receiver according to the first aspect as such or any preceding implementation form of the first aspect, the transformer is configured to perform a discrete Fourier transform (DFT) or a fast Fourier transform (FFT) to transform the communication signal into the plurality of frequency sub-band communication signals. Thus, the plurality of frequency sub-band communication signals can be determined efficiently.

The discrete Fourier transform (DFT) or the fast Fourier transform (FFT) can be performed according to an overlap-save transformation scheme or an overlap-add transformation scheme. The transformer can be an analysis filterbank (AFB).

In a third implementation form of the communication receiver according to the first aspect as such or any preceding implementation form of the first aspect, the transformer is configured to perform a poly-phase decomposition of the communication signal to transform the communication signal into the plurality of frequency sub-band communication signals. Thus, the plurality of frequency sub-band communication signals can be determined efficiently. The poly-phase decomposition can reduce a sampling frequency of the plurality of frequency sub-band communication signals.

In a forth implementation form of the communication receiver according to the first aspect as such or any preceding implementation form of the first aspect, the smoothing function is a triangular function or a Gaussian function. Thus, a smoothing of the group delay function can be realized efficiently. A length of the smoothing function can be less than a length of the group delay function.

In a fifth implementation form of the communication receiver according to the first aspect as such or any preceding implementation form of the first aspect, the first delayer of the plurality of first delayers comprises a finite impulse response (FIR) filter being configured to filter the frequency sub-band communication signal of the plurality of frequency sub-band communication signals in time domain. Thus, a delay of the frequency sub-band communication signal can be realized efficiently.

In an sixth implementation form of the communication receiver according to the fifth implementation form of the first aspect, the finite impulse response (FIR) filter comprises filtering coefficients, and the filtering coefficients comprise solely one non-zero filtering coefficient. Thus, the delay of the frequency sub-band communication signal can be realized more efficiently.

In a seventh implementation form of the communication receiver according to the sixth implementation form of the first aspect, a plurality of phase values is associated to the different frequency sub-bands of the communication signal, wherein the plurality of phase values indicates a phase response of a communication channel inducing the group delay of the communication signal, and wherein the non-zero filtering coefficient comprises a complex value for compensating a phase value of the plurality of phase values. Thus, a phase response of a communication channel can be compensated efficiently.

The finite impulse response (FIR) filter can comprise a multiplier being configured to multiply a frequency sub-band communication signal by the complex value. The finite impulse response (FIR) filter can be a one-tap complex phase rotator.

In a eighth implementation form of the communication receiver according to the first aspect as such or any preceding implementation form of the first aspect, the second delayer of the plurality of second delayers comprises an interpolation filter being configured to interpolate the delayed frequency sub-band communication signal of the first plurality of delayed frequency sub-band communication signals in time domain. Thus, a delay of the delayed frequency sub-band communication signal can be realized efficiently.

In an ninth implementation form of the communication receiver according to the eighth implementation form of the first aspect, the interpolation filter is a linear interpolation filter. Thus, the delay of the delayed frequency sub-band communication signal can be realized more efficiently.

In a tenth implementation form of the communication receiver according to the first aspect as such or any preceding implementation form of the first aspect, the processor is configured to determine the plurality of group delay values or the group delay function upon the basis of a predetermined group delay measure. Thus, the plurality of group delay values or the group delay function can be provided efficiently.

The predetermined group delay measure can be a chromatic dispersion (CD) measure or a polarization mode dispersion (PMD) measure. The predetermined group delay measure can indicate a temporal dispersion per unit wavelength, for example 10,000 ps/nm or 40,000 ps/nm. The plurality of group delay values can be determined or approximated such that a step-shaped group delay function can be obtained.

According to a second aspect, the invention relates to a method for compensating a group delay of a communication signal, the group delay being indicated by a plurality of group delay values being associated to different frequency sub-bands of the communication signal, the plurality of group delay values forming a group delay function, the method comprising transforming the communication signal into a plurality of frequency sub-band communication signals, convoluting the group delay function by a smoothing function to obtain a total group delay function, and generating a plurality of excess group delay values as a difference between a total group delay value and the associated group delay value, delaying the plurality of frequency sub-band communication signals upon the basis of the plurality of group delay values to obtain a first plurality of delayed frequency sub-band communication signals, wherein a frequency sub-band communication signal is delayed upon the basis of a group delay value associated with the frequency sub-band communication signal, delaying the first plurality of delayed frequency sub-band communication signals upon the basis of the plurality of excess group delay values to obtain a second plurality of delayed frequency sub-band communication signals, wherein a delayed frequency sub-band communication signal of the first plurality of delayed frequency sub-band communication signals is delayed upon the basis of an excess group delay value associated with the delayed frequency sub-band communication signal of the first plurality of delayed frequency sub-band communication signals, and inversely transforming the second plurality of delayed frequency sub-band communication signals for compensating the group delay of the communication signal. Thus, an efficient concept for compensating a group delay of a communication signal can be realized.

The method can be performed by the communication receiver. Further features of the method can directly result from the functionality of the communication receiver.

In a first implementation form of the method according to the second aspect as such, delaying the plurality of frequency sub-band communication signals comprises filtering the frequency sub-band communication signal of the plurality of frequency sub-band communication signals in time domain. Thus, a delay of the frequency sub-band communication signal can be realized efficiently.

In a second implementation form of the method according to the second aspect as such or any preceding implementation form of the second aspect, delaying the first plurality of delayed frequency sub-band communication signals comprises interpolating the delayed frequency sub-band communication signal of the first plurality of delayed frequency sub-band communication signals in time domain. Thus, a delay of the delayed frequency sub-band communication signal can be realized efficiently.

According to a third aspect, the invention relates to a computer program comprising a program code for performing the method when executed on a computer. Thus, the method can be performed in an automatic and repeatable manner. The communication receiver can be programmably arranged to execute the computer program.

The invention can be implemented in hardware and/or software.

BRIEF DESCRIPTION OF THE DRAWINGS

Further implementation forms of the invention will be described with respect to the following figures, in which:

Fig. 1 shows a diagram of a communication receiver for compensating a group delay of a communication signal according to an implementation form;

Fig. 2 shows a diagram of a method for compensating a group delay of a communication signal according to an implementation form;

Fig. 3 shows a diagram of a phase response of a communication channel inducing a group delay of a communication signal according to an implementation form;

Fig. 4 shows a diagram of a group delay function being formed by a plurality of group delay values according to an implementation form;

Fig. 5 shows a diagram of a group delay function, a smoothing function, and a total group delay function according to an implementation form;

Fig. 6 shows a diagram of a first delayer and a second delayer according to an implementation form;

Fig. 7 shows a diagram of a communication receiver for compensating a group delay of a communication signal according to an implementation form;

Fig. 8 shows a diagram of a communication receiver for compensating a group delay of a communication signal according to an implementation form; and

Fig. 9 shows a diagram of a group delay compensation performance of a communication receiver according to an implementation form.

DETAILED DESCRIPTION OF IMPLEMENTATION FORMS OF THE INVENTION

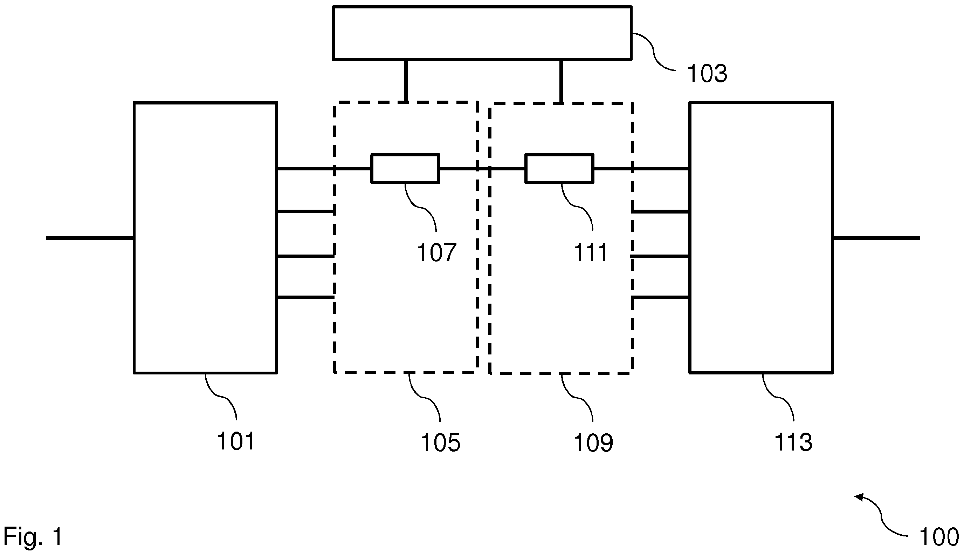

Fig. 1 shows a diagram of a communication receiver 100 for compensating a group delay of a communication signal according to an implementation form. The group delay is indicated by a plurality of group delay values being associated to different frequency sub-bands of the communication signal. The plurality of group delay values forms a group delay function.

The communication receiver 100 comprises a transformer 101 being configured to transform the communication signal into a plurality of frequency sub-band communication signals, a processor 103 being configured to convolute the group delay function by a smoothing function to obtain a plurality of excess group delay values, a plurality of first delayers 105 for delaying the plurality of frequency sub-band communication signals upon the basis of the plurality of group delay values to obtain a first plurality of delayed frequency sub-band communication signals, wherein a first delayer 107 of the plurality of first delayers 105 is configured to delay a frequency sub-band communication signal upon the basis of a group delay value associated with the frequency sub-band communication signal, a plurality of second delayers 109 for delaying the first plurality of delayed frequency sub-band communication signals upon the basis of the plurality of excess group delay values to obtain a second plurality of delayed frequency sub-band communication signals, wherein a second delayer 111 of the plurality of second delayers 109 is configured to delay a delayed frequency sub-band communication signal of the first plurality of delayed frequency sub-band communication signals upon the basis of an excess group delay value associated with the delayed frequency sub-band communication signal of the first plurality of delayed frequency sub-band communication signals, and an inverse transformer 113 being configured to inversely transform the second plurality of delayed frequency sub-band communication signals for compensating the group delay of the communication signal.

The plurality of group delay values can be integer multiples of a sampling time period of the plurality of frequency sub-band communication signals. The plurality of excess group delay values can be fractions of the sampling time period of the plurality of frequency sub-band communication signals.

The processor 103 can be configured to determine a total group delay function by convoluting the group delay function by the smoothing function, and to subtract the group delay function from the determined total group delay function to obtain an excess group delay function. The excess group delay function can be formed by the plurality of excess group delay values. The plurality of excess group delay values can be extracted from the excess group delay function and can be provided by the processor 103.

The processor 103 can provide the plurality of group delay values to the plurality of first delayers 105 and the plurality of excess group delay values to the plurality of second delayers 109. The smoothing function applied by the processor 103 can be a triangular function or a Gaussian function.

The first delayer 107 of the plurality of first delayers 105 can comprise a finite impulse response (FIR) filter being configured to filter the frequency sub-band communication signal of the plurality of frequency sub-band communication signals in time domain. The finite impulse response (FIR) filter can comprise filtering coefficients, wherein the filtering coefficients can comprise solely one non-zero filtering coefficient. Therefore, a delay by integer multiples of the sampling time period of the plurality of frequency sub-band communication signals can be achieved efficiently.

The second delayer 111 of the plurality of second delayers 109 can comprise an interpolation filter being configured to interpolate the delayed frequency sub-band communication signal of the first plurality of delayed frequency sub-band communication signals in time domain. The interpolation filter can be a linear interpolation filter. Therefore, a delay by fractions of the sampling time period of the plurality of frequency sub-band communication signals can be achieved efficiently.

The transformer 101, the plurality of first delayers 105, the plurality of second delayers 109, and the inverse transformer 113 can be implemented in an application specific integrated circuit (ASIC). The processor 103 can be implemented in a micro-controller ($\mu$C). The plurality of group delay values and/or the plurality of excess group delay values can initially be determined by the processor 103. The plurality of group delay values and/or the plurality of excess group delay values can be pre-calculated offline.

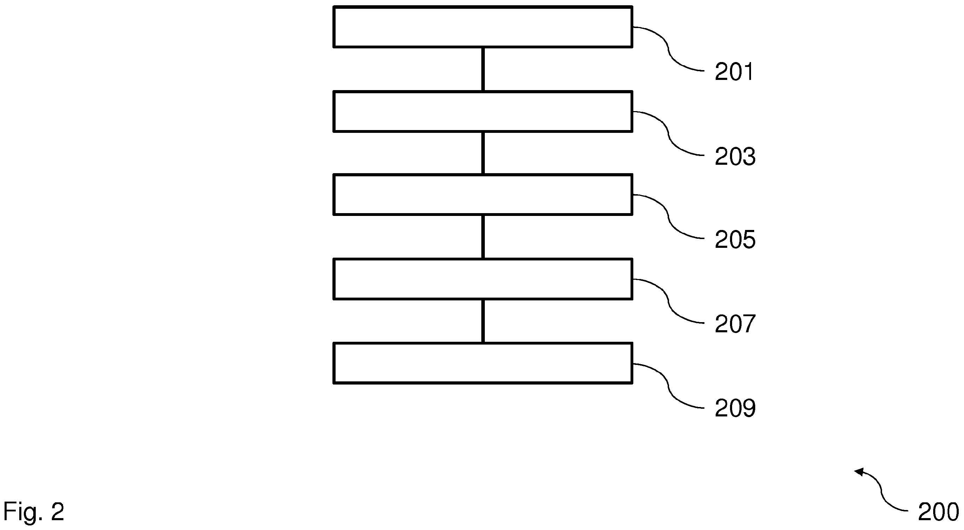

Fig. 2 shows a diagram of a method 200 for compensating a group delay of a communication signal according to an implementation form. The group delay is indicated by a plurality of group delay values being associated to different frequency sub-bands of the communication signal. The plurality of group delay values forms a group delay function.

The method 200 comprises transforming 201 the communication signal into a plurality of frequency sub-band communication signals, convoluting 203 the group delay function by a smoothing function to obtain a plurality of excess group delay values, delaying 205 the plurality of frequency sub-band communication signals upon the basis of the plurality of group delay values to obtain a first plurality of delayed frequency sub-band communication signals, wherein a frequency sub-band communication signal is delayed upon the basis of a group delay value associated with the frequency sub-band communication signal, delaying 207 the first plurality of delayed frequency sub-band communication signals upon the basis of the plurality of excess group delay values to obtain a second plurality of delayed frequency sub-band communication signals, wherein a delayed frequency sub-band communication signal of the first plurality of delayed frequency sub-band communication signals is delayed upon the basis of an excess group delay value associated with the delayed frequency sub-band communication signal of the first plurality of delayed frequency sub-band communication signals, and inversely transforming 209 the second plurality of delayed frequency sub-band communication signals for compensating the group delay of the communication signal. The method 200 can be performed by the communication receiver 100.

Delaying 205 the plurality of frequency sub-band communication signals can comprise filtering the frequency sub-band communication signal of the plurality of frequency sub-band communication signals in time domain.

Delaying 207 the first plurality of delayed frequency sub-band communication signals can comprise interpolating the delayed frequency sub-band communication signal of the first plurality of delayed frequency sub-band communication signals in time domain.

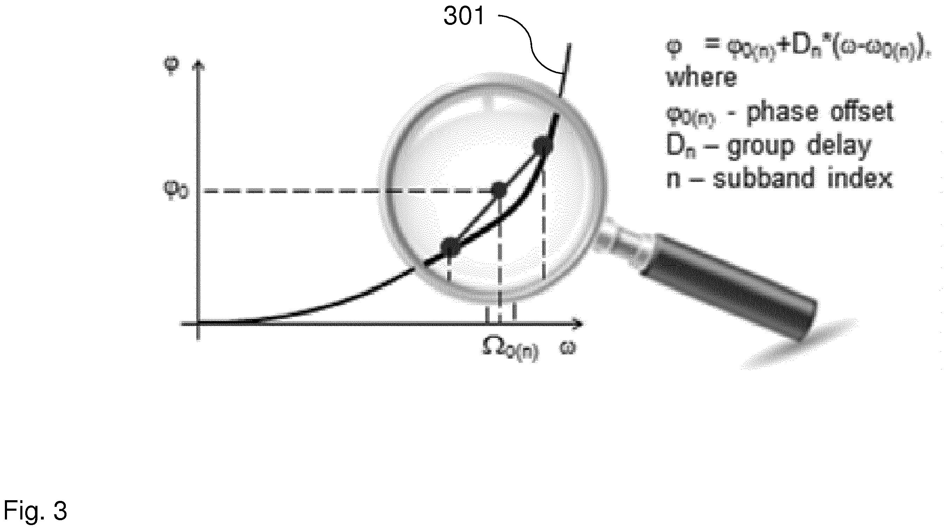

Fig. 3 shows a diagram of a phase response 301 of a communication channel inducing a group delay of a communication signal according to an implementation form. The diagram illustrates a short time Fourier transform (STFT) based approach and/or a filterbank based approach. The STFT can be considered as a filterbank followed by frequency sub-band filters. A parabolic phase response can be approached by a piecewise linear approximation in each frequency sub-band.

The diagram depicts a phase response $\varphi = \varphi_{0(n)} + D_n * (\omega - \omega_{0(n)})$, wherein $\varphi_{0(n)}$ denotes a phase offset, $D_n$, denotes a group delay, an n denotes a frequency sub-band index.

The invention relates to a variable length FIR filter for improving a phase approximation in a poly-phase sub-band chromatic dispersion (CD) equalizer. In coherent optical transmission systems, chromatic dispersion (CD) can be compensated by a digital equalizer in frequency domain (FD). A large CD can be compensated using a large FFT size, leading to a large area and considerable power consumption for example in an ASIC. An effective implementation without performance degradation is a key issue for an equalizer design.

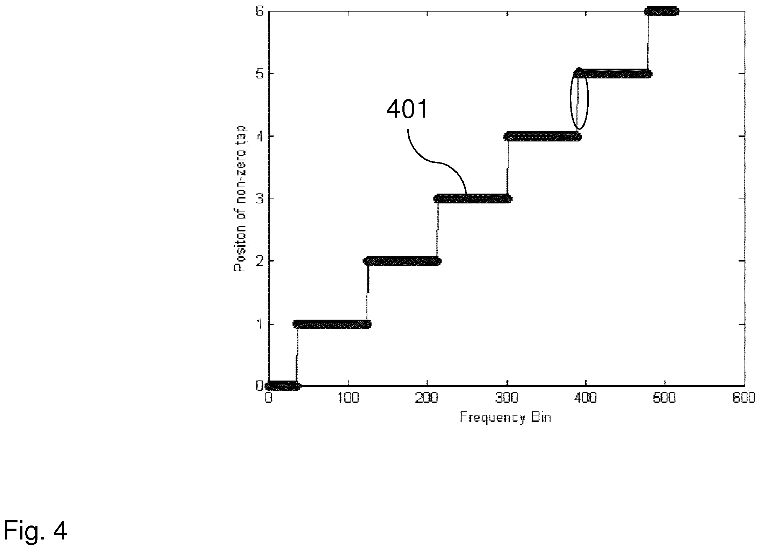

Fig. 4 shows a diagram of a group delay function 401 being formed by a plurality of group delay values according to an implementation form. The diagram further depicts an effective filtering coefficient or tap distribution, wherein a position of a non-zero filtering coefficient is illustrated over a frequency bin index. A phase distortion can happen at jumps of the group delay function 401.

A digital CD compensation stage in a coherent communication receiver can be implemented by a frequency domain (FD) filtering for example using a linear transfer function in between an FFT and an IFFT.

A typical system specification for a 100G transmission can ask for a CD tolerance up to +/-30000 ps/nm, which can refer to an inter-symbol-interference (ISI) of about 240 symbols. After an ADC sampling with 2 samples/symbol, an FFT size of 1024 samples can be used, i.e. 256 x 2 samples/symbol x 2 for 50% overlap, wherein 50% of an FFT block can be used for processing an overlap-discard with 50% block overlap between adjacent FFT blocks. This large FFT size can cover a large part of an ASIC which can also be related to area and power consumption.

A filterbank based FDE (frequency domain equalizer) can be applied which can implement a quadratic phase transfer function using an FIR filter instead of a one tap equalizer in order to reduce an FFT size while maintaining the CD tolerance or even increase the CD tolerance. Based on this approach, the CD tolerance can be increased using the same FFT size. This approach, however, may also lead to performance degradation, due to phase distortion induced by jumps between adjacent frequency sub-band groups.

Theoretically, one frequency sub-band group, i.e. a group of frequency sub-bands with the same position of non-zero filtering coefficients or taps, can cover a group delay equal to an overlap length. Only specific CD values may, however, fulfill this limit. Most of the CD values may lead to a fractional group delay in one frequency sub-band group. This may lead to phase distortion around the junctions between different frequency sub-band groups.

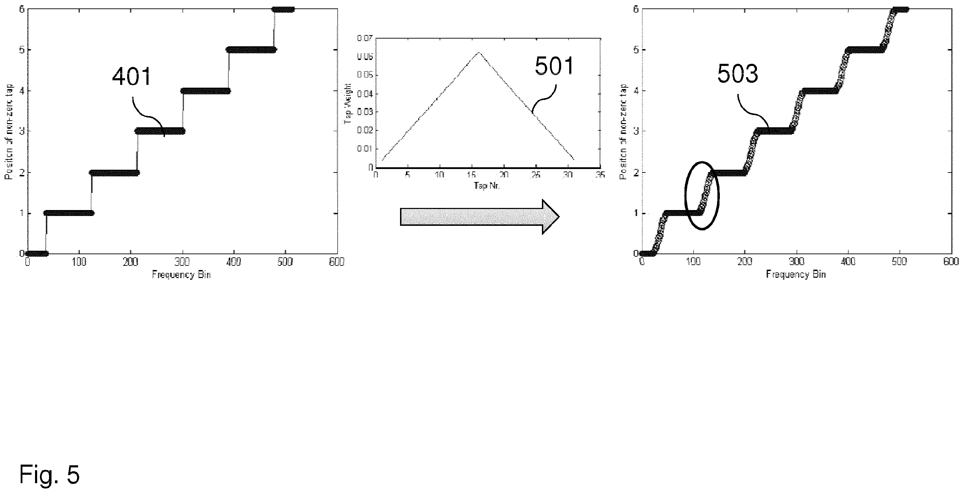

Fig. 5 shows a diagram of a group delay function 401, a smoothing function 501, and a total group delay function 503 according to an implementation form. The group delay function 401 illustrates a position of a non-zero filtering coefficient over a frequency bin index. The total group delay function 503 illustrates a position of a non-zero filtering coefficient over a frequency bin index. The smoothing function 501 illustrates a filtering coefficient weight over a filter coefficient number.

In this example, the smoothing function 501 is a triangular function. The triangular function or triangle filter is used to improve a phase approximation around the jumps between adjacent frequency sub-band groups. The group delay function 401 relates to an original MD CDC. The total group delay function 503 relates to the group delay function 401 after smoothing. The smooth filter is applied to provide a better phase approximation around the jump points.

The resulting total delay function 503 may be calculated as:

$$Delay(f) = \text{conv}\,(StepDelay(f), SmoothFunction(f)),$$

wherein StepDelay(f) denotes an original discrete group delay function 401 of frequency, SmoothFunction(f) denotes a smoothing function 501 of frequency to provide smooth transitions in the delay, and conv() denotes convolution.

In an implementation form, the SmoothFunction(f) is defined as:

$$SmoothFunction(f) = \begin{cases} 0 & if & f < -F0 \\ SF(f) & if & -F0 \leq f \leq F0 \\ 0 & if & f > F0 \end{cases}$$

wherein SF(f) denotes a smoothing function, for example a triangle function, and $2 * F_0$ defines a width of a smoothing region, for example 32 bins.

The resulting total delay comprises integer and fractional parts:

$$Delay(f) = IntegerDelay(f) + FractionalDelay(f)$$

In an implementation form, the integer part relates to a group delay value and the fractional part relates to an excess group delay value.

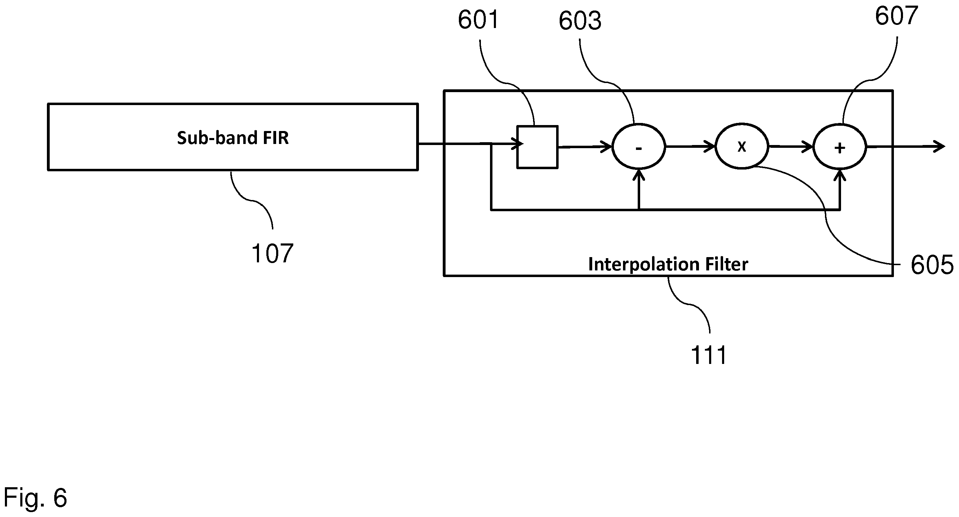

Fig. 6 shows a diagram of a first delayer 107 and a second delayer 111 according to an implementation form. The first delayer 107 is formed by a sub-band FIR filter. The second delayer 111 is formed by an interpolation filter. The IntegerDelay(f) can be realized by the first delayer 107. The FractionalDelay(f) can be realized by the second delayer 111. The second delayer 111 comprises a delay block 601, a subtraction block 603, a multiplication block 605, and an addition block 607.

The fractional delay can be implemented as a variable length FIR filter, wherein variable refers to additional filtering coefficients or taps for interpolation only at some specific sub-band frequencies as exemplarily highlighted by the circle in Fig. 4. For example, a linear interpolator can be used to provide the fractional delay. In this case, the interpolation or smoothing filter for the frequency f can operate according to the following equation:

$$Y(n, f) = FractionalDelay(f) * \big( X(n-1, f) - X(n, f) \big) + X(n, f),$$

wherein X(n, f) and Y(n, f) are correspondingly a filter input and output for a frequency bin f.

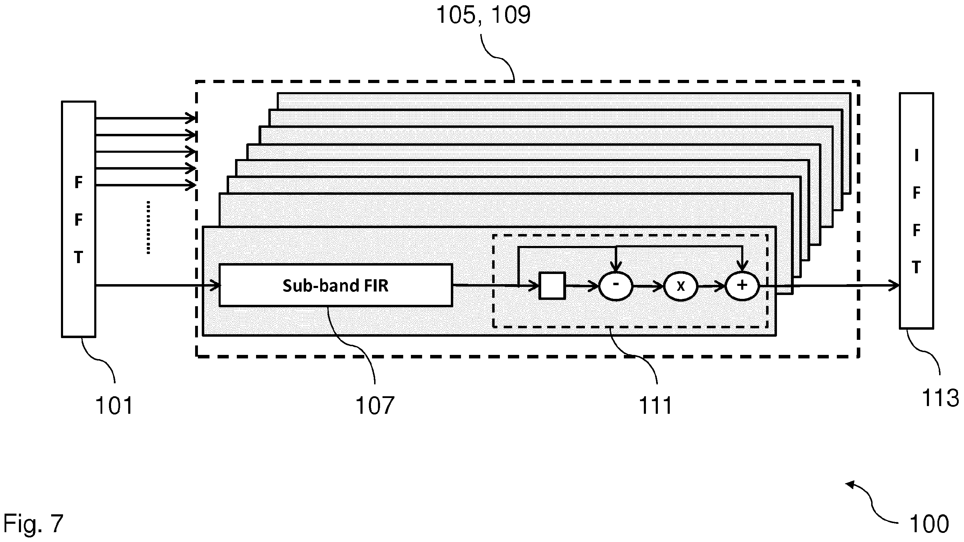

Fig. 7 shows a diagram of a communication receiver 100 for compensating a group delay of a communication signal according to an implementation form. The communication receiver 100 comprises a transformer 101, a plurality of first delayers 105, a first delayer 107, a plurality of second delayers 109, a second delayer 111, and an inverse transformer 113. The second delayer 111 comprises a delay block 601, a subtraction block 603, a multiplication block 605, and an addition block 607. The first delayer 107 is formed by a sub-band FIR filter. The second delayer 111 is formed by an optional interpolation filter. The transformer 101 is configured to perform a fast Fourier transform (FFT). The inverse transformer 113 is configured to perform an inverse fast Fourier transform (IFFT).

Using a smoothing filter to improve a phase approximation around jump points between different frequency sub-band groups, and implementing the smoothed filtering coefficients or taps can be simple. Only an interpolation filter and/or delay lines may additionally be employed. The interpolation filters may only be applied for transition regions so that the total number of such filters may be small, for example 15-20% of the FFT size.

The communication receiver 100 can be implemented as depicted. Only the part in the dashed square may be additional. They may only be applied for specific frequency bins where the smoothing filters are applied.

A simple implementation can be achieved. Only an interpolation filter may be applied after a sub-band finite impulse response (FIR) filter. Real number coefficients can be used leading to a low complexity.

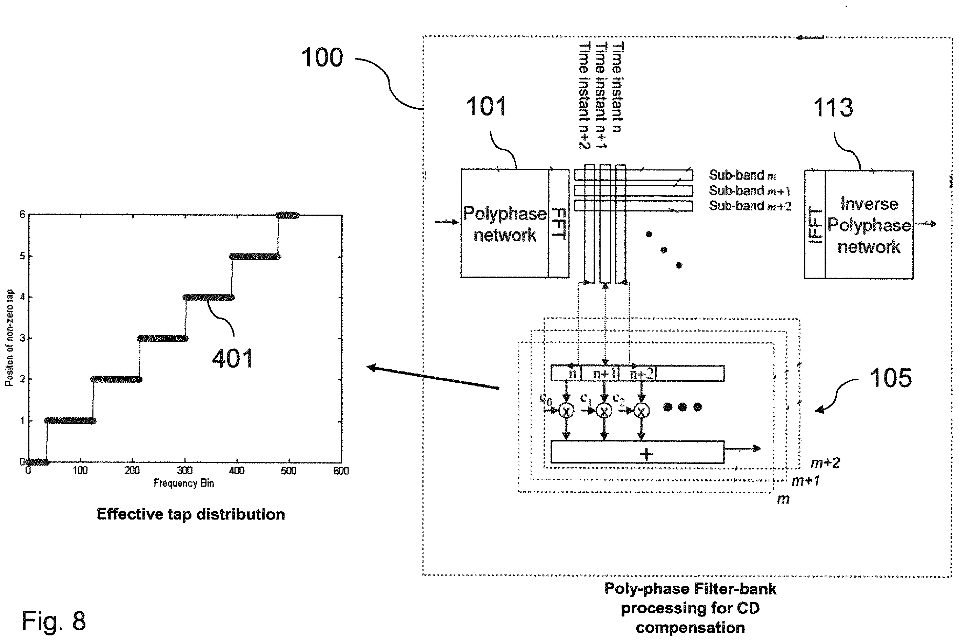

Fig. 8 shows a diagram of a communication receiver 100 for compensating a group delay of a communication signal according to an implementation form. The communication receiver 100 comprises a transformer 101, a plurality of first delayers 105, and an inverse transformer 113. The diagram further illustrates an associated group delay function 401 illustrating a position of a non-zero filtering coefficient or tap over a frequency bin index.

The transformer 101 comprises a poly-phase network and is configured to perform a fast Fourier transform (FFT). The inverse transformer 113 comprises an inverse poly-phase network and is configured to perform an inverse fast Fourier transform (IFFT).

The plurality of frequency sub-band communication signals is decomposed with regard to time instants, for example n, n+1, and n+2, and with regard to sub-band frequencies, for example m, m+1, and m+2. The plurality of first delayers 105 comprises a finite impulse response (FIR) filter. The finite impulse response (FIR) filter comprises delays by n, n+1, and n+2, multiplications by filtering coefficients $c_0$, $c_1$, and $c_2$, and a summation.

The communication receiver 100 is configured to provide a poly-phase filterbank processing for CD compensation. In this example, a multi-tap FIR filter is used to replace a one tap equalizer in each frequency sub-band in order to increase the CD tolerance. The length of the FIR filter for each frequency sub-band can be the same. The FIR filter can be implemented with only one non-zero filtering coefficient leading to only one complex multiplication.

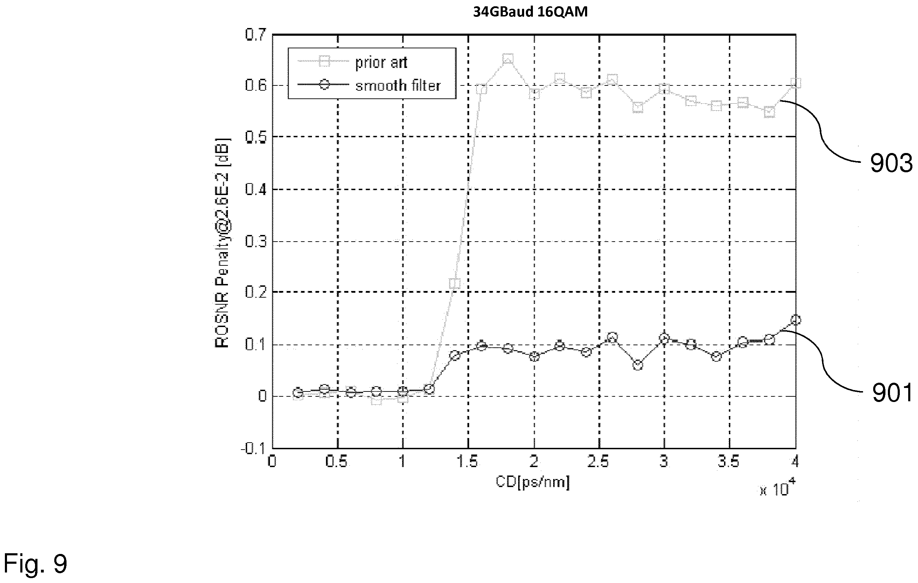

Fig. 9 shows a diagram of a group delay compensation performance of a communication receiver according to an implementation form. The diagram comprises a performance curve 901 indicating a compensation performance using a smoothing function or smoothing filter. The diagram further comprises a performance curve 903 indicating a compensation performance without using a smoothing function or smoothing filter. The diagram shows an ROSNR penalty at 2.6E-2 over a chromatic dispersion value.

Using the communication receiver, an OSNR penalty for example for a 200G PDM-16QAM 34 GBaud transmission can be investigated based on linear simulations using an ADC sampling with 2 samples per symbol. Using an FFT size of 512 samples, a smoothing function or smoothing filter can yield a 0.4dB ROSNR improvement for example at 40,000 ps/nm CD.

The invention allows for a considerable improvement of compensation performance and allows for a low complexity of implementation. For example, a 0.4dB ROSNR improvement at 40,000ps/nm CD for 200G PDM-160AM transponders can be achieved. Only one real number coefficient for each frequency sub-band or bin may be applied.

An efficient implementation within an ASIC can be realized, for example with only a 1.8M gates increase with regard to a basic CDC design with 27M gates.

The invention can relate to a communication system, for example an optical communication system, with a coherent communication receiver and digital signal processing for equalization. It can comprise a poly-phase sub-band equalizer for compensating a phase distortion introduced by chromatic dispersion. It can further comprise a variable length FIR filter for an improved phase approximation between frequency sub-band groups. It can provide a low complexity implementation with only one real-number coefficient.

**Claims**

1. A communication receiver (100) for compensating a group delay of a communication signal, the group delay being indicated by a plurality of group delay values being associated to different frequency sub-bands of the communication signal, the plurality of group delay values forming a group delay function (401), the communication receiver (100) comprising:

   a transformer (101) being configured to transform the communication signal into a plurality of frequency sub-band communication signals;
   a processor (103) being configured to convolute the group delay function (401) by a smoothing function (501) to obtain a total group delay function, and to generate a plurality of excess group delay values as a difference between a total group delay value and the associated group delay value;
   a plurality of first delayers (105) for delaying the plurality of frequency sub-band communication signals upon the basis of the plurality of group delay values to obtain a first plurality of delayed frequency sub-band communication signals, wherein a first delayer (107) of the plurality of first delayers (105) is configured to delay a frequency sub-band communication signal upon the basis of a group delay value associated with the frequency sub-band communication signal;
   a plurality of second delayers (109) for delaying the first plurality of delayed frequency sub-band communication signals upon the basis of the plurality of excess group delay values to obtain a second plurality of delayed frequency sub-band communication signals, wherein a second delayer (111) of the plurality of second delayers (109) is configured to delay a delayed frequency sub-band communication signal of the first plurality of delayed frequency sub-band communication signals upon the basis of an excess group delay value associated with the delayed frequency sub-band communication signal of the first plurality of delayed frequency sub-band communication signals; and
   an inverse transformer (113) being configured to inversely transform the second plurality of delayed frequency sub-band communication signals for compensating the group delay of the communication signal.

2. The communication receiver (100) of claim 1, wherein the plurality of group delay values are integer multiples of a sampling time period of the plurality of frequency sub-band communication signals, and wherein the plurality of excess group delay values are fractions of the sampling time period of the plurality of frequency sub-band communication signals.

3. The communication receiver (100) of claims 1 or 2, wherein the transformer (101) is configured to perform a discrete Fourier transform, DFT, or a fast Fourier transform, FFT, to transform the communication signal into the plurality of frequency sub-band communication signals.

4. The communication receiver (100) of any of the preceding claims, wherein the transformer (101) is configured to perform a poly-phase decomposition of the communication signal to transform the communication signal into the plurality of frequency sub-band communication signals.

5. The communication receiver (100) of any of the preceding claims, wherein the smoothing function (501) is a triangular function or a Gaussian function.

6. The communication receiver (100) of any of the preceding claims, wherein the first delayer (107) of the plurality of first delayers (105) comprises a finite impulse response, FIR, filter being configured to filter the frequency sub-band communication signal of the plurality of frequency sub-band communication signals in time domain.

7. The communication receiver (100) of claim 6, wherein the FIR filter comprises filtering coefficients, and wherein the filtering coefficients comprise solely one non-zero filtering coefficient.

8. The communication receiver (100) of claim 7, wherein a plurality of phase values is associated to the different frequency sub-bands of the communication signal, wherein the plurality of phase values indicates a phase response (301) of a communication channel inducing the group delay of the communication signal, and wherein the non-zero filtering coefficient comprises a complex value for compensating a phase value of the plurality of phase values.

9. The communication receiver (100) of any of the preceding claims, wherein the second delayer (111) of the plurality of second delayers (109) comprises an interpolation filter being configured to interpolate the delayed frequency sub-band communication signal of the first plurality of delayed frequency sub-band communication signals in time domain.

10. The communication receiver (100) of claim 9, wherein the interpolation filter is a linear interpolation filter.

11. The communication receiver (100) of any of the preceding claims, wherein the processor (103) is configured to determine the plurality of group delay values or the group delay function (401) upon the basis of a predetermined group delay measure.

12. A method (200) for compensating a group delay of a communication signal, the group delay being indicated by a plurality of group delay values being associated to different frequency sub-bands of the communication signal, the plurality of group delay values forming a group delay function (401), the method (200) comprising:

transforming (201) the communication signal into a plurality of frequency sub-band communication signals;
convoluting (203) the group delay function (401) by a smoothing function (501) to obtain a total group delay function and generating a plurality of excess group delay values as a difference between a total group delay value and the associated group delay value;
delaying (205) the plurality of frequency sub-band communication signals upon the basis of the plurality of group delay values to obtain a first plurality of delayed frequency sub-band communication signals, wherein a frequency sub-band communication signal is delayed upon the basis of a group delay value associated with the frequency sub-band communication signal;
delaying (207) the first plurality of delayed frequency sub-band communication signals upon the basis of the plurality of excess group delay values to obtain a second plurality of delayed frequency sub-band communication signals, wherein a delayed frequency sub-band communication signal of the first plurality of delayed frequency sub-band communication signals is delayed upon the basis of an excess group delay value associated with the delayed frequency sub-band communication signal of the first plurality of delayed frequency sub-band communication signals; and
inversely transforming (209) the second plurality of delayed frequency sub-band communication signals for compensating the group delay of the communication signal.

13. The method (200) of claim 12, wherein delaying (205) the plurality of frequency sub-band communication signals comprises filtering the frequency sub-band communication signal of the plurality of frequency sub-band communication signals in time domain.

14. The method (200) of claims 12 or 13, wherein delaying (207) the first plurality of delayed frequency sub-band communication signals comprises interpolating the delayed frequency sub-band communication signal of the first plurality of delayed frequency sub-band communication signals in time domain.

15. A computer program comprising a program code for performing the method (200) of any of the claims 12 to 14 when executed on a computer.

**Patentansprüche**

1. Kommunikationsempfänger (100) zum Kompensieren einer Gruppenverzögerung eines Kommunikationssignals, wobei die Gruppenverzögerung durch mehrere Gruppenverzögerungswerte angezeigt wird, die verschiedenen Frequenzteilbändern des Kommunikationssignals zugeordnet sind, wobei die mehreren Gruppenverzögerungswerte eine Gruppenverzögerungsfunktion (401) bilden, wobei der Kommunikationsempfänger (100) Folgendes umfasst:

einen Transformator (101), der dafür konfiguriert ist, das Kommunikationssignal in mehrere Frequenzteilband-Kommunikationssignale zu transformieren,
einen Prozessor (103), der dafür konfiguriert ist, die Gruppenverzögerungsfunktion (401) mit einer Glättungsfunktion (501) zu falten, um eine Gesamtgruppenverzögerungsfunktion zu erzielen und mehrere überschüssige Gruppenverzögerungswerte als eine Differenz zwischen einem Gesamtgruppenverzögerungswert und dem zugeordneten Gruppenverzögerungswert zu erzeugen,

mehrere erste Verzögerer (105) zum Verzögern der mehreren Frequenzteilband-Kommunikationssignale auf der Grundlage der mehreren Gruppenverzögerungswerte, um erste mehrere verzögerte Frequenzteilband-Kommunikationssignale zu erzielen, wobei ein erster Verzögerer (107) der mehreren ersten Verzögerer (105) dafür konfiguriert ist, ein Frequenzteilband-Kommunikationssignal auf der Grundlage eines Gruppenverzögerungswertes zu verzögern, der dem Frequenzteilband-Kommunikationssignal zugeordnet ist,

mehrere zweite Verzögerer (109) zum Verzögern der ersten mehreren verzögerten Frequenzteilband-Kommunikationssignale auf der Grundlage der mehreren überschüssigen Gruppenverzögerungswerte, um zweite mehrere verzögerte Frequenzteilband-Kommunikationssignale zu erzielen, wobei ein zweiter Verzögerer (111) der mehreren zweiten Verzögerer (109) dafür konfiguriert ist, ein verzögertes Frequenzteilband-Kommunikationssignal der ersten mehreren verzögerten Frequenzteilband-Kommunikationssignale auf der Grundlage eines überschüssigen Gruppenverzögerungswertes zu verzögern, der dem verzögerten Frequenzteilband-Kommunikationssignal der ersten mehreren verzögerten Frequenzteilband-Kommunikationssignale zugeordnet ist, und

einen Umkehrtransformator (113), der dafür konfiguriert ist, die zweiten mehreren verzögerten Frequenzteilband-Kommunikationssignale umgekehrt zu transformieren, um die Gruppenverzögerung des Kommunikationssignals zu kompensieren.

2. Kommunikationsempfänger (100) nach Anspruch 1, wobei die mehreren Gruppenverzögerungswerte ganzzahlige Mehrfache einer Abtastzeitspanne der mehreren Frequenzteilband-Kommunikationssignale sind und wobei die mehreren überschüssigen Gruppenverzögerungswerte Bruchteile der Abtastzeitspanne der mehreren Frequenzteilband-Kommunikationssignale sind.

3. Kommunikationsempfänger (100) nach Anspruch 1 oder 2, wobei der Transformator (101) dafür konfiguriert ist, eine diskrete Fouriertransformation (DFT) oder eine schnelle Fouriertransformation (FFT) auszuführen, um das Kommunikationssignal in die mehreren Frequenzteilband-Kommunikationssignale zu transformieren.

4. Kommunikationsempfänger (100) nach einem der vorhergehenden Ansprüche, wobei der Transformator (101) dafür konfiguriert ist, eine Mehrphasenspaltung des Kommunikationssignals auszuführen, um das Kommunikationssignal in die mehreren Frequenzteilband-Kommunikationssignale zu transformieren.

5. Kommunikationsempfänger (100) nach einem der vorhergehenden Ansprüche, wobei die Glättungsfunktion (501) eine Dreiecksfunktion oder eine Gaußsche Funktion ist.

6. Kommunikationsempfänger (100) nach einem der vorhergehenden Ansprüche, wobei der erste Verzögerer (107) der mehreren ersten Verzögerer (105) einen Filter mit endlicher Impulsantwort (FIR-Filter) umfasst, der dafür konfiguriert ist, das Frequenzteilband-Kommunikationssignal aus den mehreren Frequenzteilband-Kommunikationssignalen im Zeitbereich zu filtern.

7. Kommunikationsempfänger (100) nach Anspruch 6, wobei der FIR-Filter Filterungskoeffizienten umfasst und wobei die Filterungskoeffizienten lediglich einen Nicht-Null-Koeffizienten umfassen.

8. Kommunikationsempfänger (100) nach Anspruch 7, wobei den verschiedenen Frequenzteilbändern des Kommunikationssignals mehrere Phasenwerte zugeordnet werden, wobei die mehreren Phasenwerte eine Phasenantwort (301) eines Kommunikationskanals anzeigen, der die Gruppenverzögerung des Kommunikationssignals induziert, und wobei der Nicht-Null-Filterungskoeffizient einen komplexen Wert zum Kompensieren eines Phasenwertes der mehreren Phasenwerte umfasst.

9. Kommunikationsempfänger (100) nach einem der vorhergehenden Ansprüche, wobei der zweite Verzögerer (111) der mehreren zweiten Verzögerer (109) einen Interpolationsfilter umfasst, der dafür konfiguriert ist, das verzögerte Frequenzteilband-Kommunikationssignal der ersten mehreren verzögerten Frequenzteilband-Kommunikationssignale im Zeitbereich zu interpolieren.

10. Kommunikationsempfänger (100) nach Anspruch 9, wobei der Interpolationsfilter ein linearer Interpolationsfilter ist.

11. Kommunikationsempfänger (100) nach einem der vorhergehenden Ansprüche, wobei der Prozessor (103) dafür konfiguriert ist, die mehreren Gruppenverzögerungswerte oder die Gruppenverzögerungsfunktion (401) auf der

11

Grundlage eines festgelegten Gruppenverzögerungsmesswertes zu bestimmen.

12. Verfahren (200) zum Kompensieren einer Gruppenverzögerung eines Kommunikationssignals, wobei die Gruppenverzögerung durch mehrere Gruppenverzögerungswerte angezeigt wird, die verschiedenen Frequenzteilbändern des Kommunikationssignals zugeordnet sind, wobei die mehreren Gruppenverzögerungswerte eine Gruppenverzögerungsfunktion (401) bilden, wobei das Verfahren (200) Folgendes umfasst:

Transformieren (201) des Kommunikationssignals in mehrere Frequenzteilband-Kommunikationssignale,
Falten (203) der Gruppenverzögerungsfunktion (401) mit einer Glättungsfunktion (501), um eine Gesamtgruppenverzögerungsfunktion zu erzielen und mehrere überschüssige Gruppenverzögerungswerte als eine Differenz zwischen einem Gesamtgruppenverzögerungswert und dem zugeordneten Gruppenverzögerungswert zu erzeugen,
Verzögern (205) der mehreren Frequenzteilband-Kommunikationssignale auf der Grundlage der mehreren Gruppenverzögerungswerte, um erste mehrere verzögerte Frequenzteilband-Kommunikationssignale zu erzielen, wobei ein Frequenzteilband-Kommunikationssignal auf der Grundlage eines Gruppenverzögerungswertes verzögert wird, der dem Frequenzteilband-Kommunikationssignal zugeordnet ist,
Verzögern (207) der ersten mehreren verzögerten Frequenzteilband-Kommunikationssignale auf der Grundlage der mehreren überschüssigen Gruppenverzögerungswerte, um zweite mehrere verzögerte Frequenzteilband-Kommunikationssignale zu erzielen, wobei ein verzögertes Frequenzteilband-Kommunikationssignal der ersten mehreren verzögerten Frequenzteilband-Kommunikationssignale auf der Grundlage eines überschüssigen Gruppenverzögerungswertes verzögert wird, der dem verzögerten Frequenzteilband-Kommunikationssignal der ersten mehreren verzögerten Frequenzteilband-Kommunikationssignale zugeordnet ist, und
Umkehrtransformieren (209) der zweiten mehreren verzögerten Frequenzteilband-Kommunikationssignale, um die Gruppenverzögerung des Kommunikationssignals zu kompensieren.

13. Verfahren (200) nach Anspruch 12, wobei das Verzögern (205) der mehreren Frequenzteilband-Kommunikationssignale das Filtern des Frequenzteilband-Kommunikationssignals der mehreren Frequenzteilband-Kommunikationssignale im Zeitbereich umfasst.

14. Verfahren (200) nach Anspruch 12 oder 13, wobei das Verzögern (207) der ersten mehreren verzögerten Frequenzteilband-Kommunikationssignale das Interpolieren des verzögerten Frequenzteilband-Kommunikationssignals der ersten mehreren verzögerten Frequenzteilband-Kommunikationssignale im Zeitbereich umfasst.

15. Computerprogramm, umfassend einen Programmcode, der bei Ausführung auf einem Computer das Verfahren (200) nach einem der Ansprüche 12 bis 14 ausführt.

## Revendications

1. Récepteur (100) de communication pour compenser un temps de propagation de groupe d'un signal de communication, le temps de propagation de groupe étant indiqué par une pluralité de valeurs de temps de propagation de groupe qui sont associées à différentes sous-bandes de fréquence du signal de communication, la pluralité de valeurs de temps de propagation de groupe formant une fonction (401) de temps de propagation de groupe, le récepteur (100) de communication comportant :

un moyen (101) de transformation qui est configuré pour transformer le signal de communication en une pluralité de signaux de communication en sous-bandes de fréquence ;
un processeur (103) qui est configuré pour effectuer un produit de convolution de la fonction (401) de temps de propagation de groupe par une fonction (501) de lissage pour obtenir une fonction totale de temps de propagation de groupe, et pour générer une pluralité de valeurs d'excès de temps de propagation de groupe comme une différence entre une valeur totale de temps de propagation de groupe et la valeur associée de temps de propagation de groupe ;
une pluralité de premiers retardateurs (105) servant à retarder la pluralité de signaux de communication en sous-bandes de fréquence d'après la pluralité de valeurs de temps de propagation de groupe pour obtenir une première pluralité de signaux retardés de communication en sous-bandes de fréquence, un premier retardateur (107) de la pluralité de premiers retardateurs (105) étant configuré pour retarder un signal de communication en sous-bande de fréquence d'après une valeur de temps de propagation de groupe associée au signal de communication en sous-bande de fréquence ;

une pluralité de deuxièmes retardateurs (109) servant à retarder la première pluralité de signaux retardés de communication en sous-bandes de fréquence d'après la pluralité de valeurs d'excès de temps de propagation de groupe pour obtenir une deuxième pluralité de signaux retardés de communication en sous-bandes de fréquence, un deuxième retardateur (111) de la pluralité de deuxièmes retardateurs (109) étant configuré pour retarder un signal retardé de communication en sous-bande de fréquence de la première pluralité de signaux retardés de communication en sous-bandes de fréquence d'après une valeur d'excès de temps de propagation de groupe associée au signal retardé de communication en sous-bande de fréquence de la première pluralité de signaux retardés de communication en sous-bandes de fréquence ; et

un moyen (113) de transformation inverse qui est configuré pour appliquer une transformation inverse à la deuxième pluralité de signaux retardés de communication en sous-bandes de fréquence pour compenser le temps de propagation de groupe du signal de communication.

**2.** Récepteur (100) de communication selon la revendication 1, la pluralité de valeurs de temps de propagation de groupe étant des multiples entiers d'une période d'échantillonnage de la pluralité de signaux de communication en sous-bandes de fréquence, et la pluralité de valeurs d'excès de temps de propagation de groupe étant des fractions de la période d'échantillonnage de la pluralité de signaux de communication en sous-bandes de fréquence.

**3.** Récepteur (100) de communication selon les revendications 1 ou 2, le moyen (101) de transformation étant configuré pour effectuer une transformée de Fourier discrète, DFT, ou une transformée de Fourier rapide, FFT, pour transformer le signal de communication en la pluralité de signaux de communication en sous-bandes de fréquence.

**4.** Récepteur (100) de communication selon l'une quelconque des revendications précédentes, le moyen (101) de transformation étant configuré pour effectuer une décomposition polyphasée du signal de communication afin de transformer le signal de communication en la pluralité de signaux de communication en sous-bandes de fréquence.

**5.** Récepteur (100) de communication selon l'une quelconque des revendications précédentes, la fonction (501) de lissage étant une fonction triangulaire ou une fonction gaussienne.

**6.** Récepteur (100) de communication selon l'une quelconque des revendications précédentes, le premier retardateur (107) de la pluralité de premiers retardateurs (105) comportant un filtre à réponse impulsionnelle finie, FIR, qui est configuré pour filtrer le signal de communication en sous-bande de fréquence de la pluralité de signaux de communication en sous-bandes de fréquence dans le domaine temporel.

**7.** Récepteur (100) de communication selon la revendication 6, le filtre FIR comportant des coefficients de filtrage, et les coefficients de filtrage comportant uniquement un coefficient de filtrage non nul.

**8.** Récepteur (100) de communication selon la revendication 7, une pluralité de valeurs de phase étant associée aux différentes sous-bandes de fréquence du signal de communication, la pluralité de valeurs de phase indiquant une réponse (301) de phase d'un canal de communication induisant le temps de propagation de groupe du signal de communication, et le coefficient de filtrage non nul comportant une valeur complexe pour compenser une valeur de phase de la pluralité de valeurs de phase.

**9.** Récepteur (100) de communication selon l'une quelconque des revendications précédentes, le deuxième retardateur (111) de la pluralité de deuxièmes retardateurs (109) comportant un filtre à interpolation qui est configuré pour interpoler le signal retardé de communication en sous-bande de fréquence de la première pluralité de signaux retardés de communication en sous-bandes de fréquence dans le domaine temporel.

**10.** Récepteur (100) de communication selon la revendication 9, le filtre à interpolation étant un filtre à interpolation linéaire.

**11.** Récepteur (100) de communication selon l'une quelconque des revendications précédentes, le processeur (103) étant configuré pour déterminer la pluralité de valeurs de temps de propagation de groupe ou la fonction (401) de temps de propagation de groupe d'après une mesure prédéterminée de temps de propagation de groupe.

**12.** Procédé (200) de compensation d'un temps de propagation de groupe d'un signal de communication, le temps de propagation de groupe étant indiqué par une pluralité de valeurs de temps de propagation de groupe qui sont associées à différentes sous-bandes de fréquence du signal de communication, la pluralité de valeurs de temps de propagation de groupe formant une fonction (401) de temps de propagation de groupe, le procédé (200) comportant les étapes consistant à :

transformer (201) le signal de communication en une pluralité de signaux de communication en sous-bandes de fréquence ;

effectuer (203) un produit de convolution de la fonction (401) de temps de propagation de groupe par une fonction (501) de lissage pour obtenir une fonction totale de temps de propagation de groupe et générer une pluralité de valeurs d'excès de temps de propagation de groupe comme une différence entre une valeur totale de temps de propagation de groupe et la valeur associée de temps de propagation de groupe ;

retarder (205) la pluralité de signaux de communication en sous-bandes de fréquence d'après la pluralité de valeurs de temps de propagation de groupe pour obtenir une première pluralité de signaux retardés de communication en sous-bandes de fréquence, un signal de communication en sous-bande de fréquence étant retardé d'après une valeur de temps de propagation de groupe associée au signal de communication en sous-bande de fréquence ;

retarder (207) la première pluralité de signaux retardés de communication en sous-bandes de fréquence d'après la pluralité de valeurs d'excès de temps de propagation de groupe pour obtenir une deuxième pluralité de signaux retardés de communication en sous-bandes de fréquence, un signal retardé de communication en sous-bande de fréquence de la première pluralité de signaux retardés de communication en sous-bandes de fréquence étant retardé d'après une valeur d'excès de temps de propagation de groupe associée au signal retardé de communication en sous-bande de fréquence de la première pluralité de signaux retardés de communication en sous-bandes de fréquence ; et

appliquer (209) une transformation inverse à la deuxième pluralité de signaux retardés de communication en sous-bandes de fréquence pour compenser le temps de propagation de groupe du signal de communication.

13. Procédé (200) selon la revendication 12, le fait de retarder (205) la pluralité de signaux de communication en sous-bande de fréquence comportant le filtrage du signal de communication en sous-bande de fréquence de la pluralité de signaux de communication en sous-bandes de fréquence dans le domaine temporel.

14. Procédé (200) selon les revendications 12 ou 13, le fait de retarder (207) la première pluralité de signaux retardés de communication en sous-bandes de fréquence comportant l'interpolation du signal retardé de communication en sous-bande de fréquence de la première pluralité de signaux retardés de communication en sous-bandes de fréquence dans le domaine temporel.

15. Programme d'ordinateur comportant un code de programme servant à réaliser le procédé (200) selon l'une quelconque des revendications 12 à 14 lorsqu'il est exécuté sur un ordinateur.

Fig. 1

EP 3 183 853 B1

Fig. 2

EP 3 183 853 B1

301

$$\varphi = \varphi_{O(n)} + D_n \cdot (\omega - \omega_{O(n)}),$$

where

$\varphi_{O(n)}$ - phase offset
$D_n$ - group delay
$n$ - subband index

Fig. 3

Fig. 4

Fig. 5

Fig. 6

Fig. 7

Poly-phase Filter-bank processing for CD compensation

Effective tap distribution

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013139395 A

- US 20090238578 A1

**Non-patent literature cited in the description**

- **I. SLIM ; A. MEZGHANI ; L. G. BALTAR ; J. QI ; F. N. HAUSKE ; J. A. NOSSEK.** Delayed Single-Tap Frequency-Domain Chromatic-Dispersion Compensation. *IEEE Photonics Technology Letters,* 15 January 2013, vol. 25 (2